# EUROPEAN PATENT APPLICATION

(11) **EP 3 851 297 A1**
(43) Date of publication of application: **21.07.2021**
(21) Application number: 19860725.1
(22) Date of filing: 12.09.2019
(51) Int. Cl.: B60C 13/00, B60C 11/00

(54) **TIRE**

(30) Priority: 14.09.2018 JP 2018173007
(71) Applicant: BRIDGESTONE CORPORATION, Chuo-ku Tokyo 104-8340 (JP)
(72) Inventor: MUSHA, Shinichi, Tokyo 104-8340 (JP); TAKEDA, Yohei, Tokyo 104-8340 (JP); URATA, Tomohiro, Tokyo 104-8340 (JP); NAKAMURA, Taisuke, Tokyo 104-8340 (JP)
(74) Representative: Oxley, Robin John George
(86) International application number: PCT/JP2019/035876
(87) International publication number: WO 2020/054799

(57) **Abstract**

Provided is a tire capable of maintaining excellent appearance over a long time. A tire comprises a polyurethane foam layer laminated on an outer layer of the tire, wherein, in the polyurethane foam layer, a binder layer is provided on a surface of a polyurethane foam.

## Description

### TECHNICAL FIELD

The present disclosure relates to a tire.

### BACKGROUND

Tires, including sidewalls and treads, are constantly in contact with the atmosphere. Due to deterioration caused by ozone in the atmosphere, cracks tend to occur in the tire, which requires improvement. Since the tire is repeatedly deformed during running of the vehicle, cracks, even if small at first, may extend and become large and visible. This impairs the appearance of the tire.

To protect the external surface of the tire against ozone, for example, JP 2003-535762 A (PTL 1) discloses a method whereby, upon bonding between a diene-based rubber composition and polyurethane which are poor in affinity, the surface of the diene-based rubber composition is functionalized, and a polyurethane coating layer bonded through a chemical bond is formed by application.

### CITATION LIST

### Patent Literature

PTL 1: JP 2003-535762 A

### SUMMARY

### (Technical Problem)

However, there is a problem in that the urethane protective film is susceptible to moist heat environments, and becomes sticky or loses luster due to aging.

We focused on the development of a new tire having excellent appearance such as design.

It could therefore be helpful to provide a tire capable of maintaining excellent appearance over a long time.

### (Solution to Problem)

A tire according to the present disclosure is a tire comprising a polyurethane foam layer laminated on an outer layer of the tire, wherein, in the polyurethane foam layer, a binder layer is provided on a surface of a polyurethane foam.

The tire according to the present disclosure is capable of maintaining excellent appearance over a long time.

### (Advantageous Effect)

It is therefore possible to provide a tire capable of maintaining excellent appearance over a long time.

### DETAILED DESCRIPTION

Embodiments according to the present disclosure will be described below. The following description is intended for illustrative purposes only, and is not intended to limit the scope of the present disclosure in any way.

In the present disclosure, two or more embodiments may be combined as appropriate.

### (Tire)

A tire according to the present disclosure is a tire comprising a polyurethane foam layer laminated on an outer layer of the tire, wherein, in the polyurethane foam layer, a binder layer is provided on a surface of a polyurethane foam.

### <Polyurethane foam layer>

The tire according to the present disclosure comprises the polyurethane foam layer laminated on the outer layer of the tire. In the polyurethane foam layer, the binder layer is provided on the surface of the polyurethane foam (including the inner surfaces of cells of polyurethane).

### - Polyurethane foam

The polyurethane foam contributes to improved ozone crack resistance of the tire because urethane does not have an unsaturated bond in a molecular chain. The polyurethane foam is not limited, and a publicly known polyurethane foam may be used. For example, the polyurethane foam may be obtained by foaming a polyurethane resin using a foaming agent or the like.

Examples of the polyurethane resin include a urethane resin formed from a polyol and a polyisocyanate.

Examples of the polyol include a low-molecular polyol and a high-molecular polyol. These polyols may be used alone or in combination of two or more.

Examples of the low-molecular polyol include ethylene glycol, propylene glycol, 1,4-butanediol, glycerol, trimethylolpropane, 1,2,6-hexanetriol, erythritol, and sorbitol.

Examples of the high-molecular polyol include a polyether-based polyol and a polyester-based polyol.

Examples of the polyether-based polyol include polyoxyalkylene-polyols such as polyoxyethylene glycol, polyoxyethylene glyceryl ether, polyoxyethylene trimethylolpropane ether, polyoxyethylene sorbitol ether, polyoxypropylene bisphenol A ether, polyoxypropylene glycol, polyoxypropylene glyceryl ether, polyoxypropylene trimethylolpropane ether, polyoxypropylene sorbitol ether, polyoxyethylene-polyoxypropylene glycol, polyoxyethylene-polyoxypropylene glyceryl ether, polyoxyethylene-polyoxypropylene trimethylolpropane ether, polyoxyethylene-polyoxypropylene sorbitol ether, and polyoxyethylene-polyoxypropylene bisphenol A ether.

Examples of the polyester-based polyol include polyethylene adipate polyol, polybutylene adipate polyol, polyethylene-butylene adipate polyol, and polyethylene terephthalate polyol.

These low-molecular polyols and high-molecular polyols may be used alone or in combination of two or more.

Examples of the polyisocyanate include 4,4'-diphenylmethane diisocyanate (MDI), tolylene diisocyanate (TDI), dicyclohexylmethane diisocyanate, xylene diisocyanate, hexamethylene diisocyanate, isophorone diisocyanate, o-toluidine diisocyanate, naphthylene diisocyanate, xylylene diisocyanate, lysine diisocyanate, and polymethylene polyphenylene polyisocyanate. These polyisocyanates may be used alone or in combination of two or more.

The polyurethane foam may be any of a flexible foam, a semi-rigid foam, and a rigid foam.

The cell structure of the polyurethane foam is not limited, and may be any of a closed cell structure, an open cell structure, and a cell structure (hereafter simply referred to as "mixed cell structure") in which a closed cell structure and an open cell structure are mixed. The cell structure of the polyurethane foam is preferably an open cell structure or a mixed cell structure, and more preferably an open cell structure, from the viewpoint of impregnation with substances such as a binder and carbon black.

The cell diameter of the polyurethane foam may be adjusted as appropriate, and is, for example, 250 µm or more and 10 mm or less. The cell diameter is calculated after measuring the number of cells (per 25 mm) in accordance with JIS K6400-1 Appendix 1.

In one embodiment, the cell diameter of the polyurethane foam is 10 mm or less, 5 mm or less, 3 mm or less, 1 mm or less, 900 µm or less, 800 µm or less, 700 µm or less, 600 µm or less, 500 µm or less, 450 µm or less, 400 µm or less, 350 µm or less, 300 µm or less, 250 µm or less, 200 µm or less, 150 µm or less, or 100 µm or less. In another embodiment, the cell diameter of the polyurethane foam is 250 µm or more, 300 µm or more, 350 µm or more, 400 µm or more, 500 µm or more, 600 µm or more, 700 µm or more, 800 µm or more, 900 µm or more, 1 mm or more, 3 mm or more, or 5 mm or more.

The air permeability of the polyurethane foam may be adjusted as appropriate, and is for example 30 cc/cm²/sec to 500 cc/cm²/sec, preferably 30 cc/cm²/sec to 200 cc/cm²/sec, and more preferably 60 cc/cm²/sec to 150 cc/cm²/sec, for a thickness of 2 mm. The air permeability is measured in accordance with JIS K6400-7. In one embodiment, the air permeability (cc/cm²/sec) of the polyurethane foam is 30 or more or 60 or more, and 500 or less, 200 or less, 150 or less, or 100 or less.

In the tire according to the present disclosure, the air permeability of the polyurethane foam is preferably 30 cc/cm²/sec to 500 cc/cm²/sec for a thickness of 2 mm.

This has an effect of improving the balance between the impregnation with the binder and particles and the crack resistance of the tire.

The thickness of the polyurethane foam is typically the same as or substantially the same as the thickness of the polyurethane foam layer. The thickness of the polyurethane foam may be adjusted as appropriate, and is for example 0.5 mm to 50 mm and preferably 1 mm to 20 mm.

As the polyurethane foam, a commercial product may be used. Examples of commercially available polyurethane foams include "EVERLIGHT®" series (EVERLIGHT is a registered trademark in Japan, other countries, or both) such as "EVERLIGHT® HZCD", "EVERLIGHT® HZ", "EVERLIGHT® CD", "EVERLIGHT® HR", and "EVERLIGHT® ZC" produced by Bridgestone Chemitech Co., Ltd.

### - Binder layer

In the tire according to the present disclosure, the binder layer is a layer of a binder provided on the surface of the polyurethane foam (including the inner surfaces of cells of polyurethane). Thus, the moist heat resistance of the polyurethane foam layer can be improved, and the tire can keep luster and maintain excellent appearance over a long time.

The binder forming the binder layer is not limited, and a publicly known binder may be used. Examples of the binder include acrylic resin, urethane-based resin, fluorine-based resin, polyvinyl alcohol, polyacrylamide, polyvinyl chloride resin, vinyl acetate resin, butadiene resin, epoxy resin, alkyd resin, melamine resin, and chloroprene rubber. These binders may be used alone or in combination of two or more.

Examples of the acrylic resin include acryl resin, polyacrylic ester resin, acrylic acid-styrene copolymer resin, and acrylic acid-vinyl acetate copolymer resin.

In one embodiment, the binder is one or more selected from the group consisting of a urethane-based resin, an acrylic resin, and a fluorine-based resin.

In the tire according to the present disclosure, the binder of the binder layer is preferably one or more selected from the group consisting of a urethane-based resin and an acrylic resin.

This further improves the appearance of the tire.

As the binder, a solution containing the binder and a solvent (e.g. water, an organic solvent, etc.) may be used, or a material obtained by combining the solution of the binder with the below-described design substance, for example, an acrylic resin-based paint, may be used.

The amount of the binder is not limited, and may be adjusted as appropriate. For example, the amount of the binder is 12 parts to 90 parts by mass with respect to 100 parts by mass of the polyurethane foam.

The method of providing the binder layer on the surface of the polyurethane foam is not limited, and may be selected as appropriate. For example, a foaming stock solution before foaming of the polyurethane foam may be mixed with the binder and foamed, to provide the binder layer on the surface of the polyurethane foam. Alternatively, the binder may be brought into contact with the polyurethane foam after foaming, to provide the binder layer on the surface of the polyurethane foam.

In the case of bringing the binder into contact with the polyurethane foam after foaming, for example, the binder layer may be provided on the surface of the polyurethane foam (e.g. the wall surfaces of cells) by applying pressure to the polyurethane foam after foaming of any shape, such as a sheet shape or a disc shape, to compress the polyurethane foam, immersing the compressed polyurethane foam in a solution of the binder, releasing the pressure to expand the polyurethane foam in the solution of the binder, and then drying the result, thus impregnating the cells of the polyurethane foam with the binder. Alternatively, the binder layer may be provided on the surface of the polyurethane foam (e.g. the wall surfaces of cells) by immersing the polyurethane foam of any shape, such as a sheet shape or a disc shape, in a solution of the binder, optionally performing application of pressure to and releasing of the pressure from the immersed polyurethane foam one or more times to impregnate the cells of the polyurethane foam with the binder and bring them in contact with each other, and then drying the result.

### - Design substance

In the present disclosure, the term "design substance" denotes a substance that can contribute to improved design of the tire.

In the tire according to the present disclosure, the polyurethane foam preferably contains a design substance.

This enhances the design of the tire.

In the present disclosure, the expression "the polyurethane foam contains a design substance" indicates that it suffices for the polyurethane foam to contain a design substance, and includes, for example, both the case where the polyurethane foam obtained by adding the design substance to the foaming stock solution before foaming of the polyurethane foam and foaming the polyurethane foam contains the design substance in at least one part thereof (e.g. the surface of the polyurethane foam, inside the cells, etc.) and the case where, as a result of the polyurethane foam after foaming being brought into contact with the design substance, the polyurethane foam contains the design substance in at least one part thereof (e.g. the surface of the polyurethane foam, inside the cells, etc.) In the latter case, it suffices that the design substance is in contact with at least part of the polyurethane foam. For example, the design substance may be supported in the cells of the polyurethane foam via the binder layer, or the design substance may be supported in the cells of the polyurethane foam without the binder layer being interposed therebetween.

In the tire according to the present disclosure, the design substance is preferably supported by the polyurethane foam via the binder layer.

This makes it possible to maintain excellent appearance of the tire for a longer time.

To support the design substance by the polyurethane foam via the binder layer, for example, the above-described method of applying pressure to the polyurethane foam after foaming to compress the polyurethane foam, immersing the compressed polyurethane foam in a solution containing the binder and the design substance, releasing the pressure to expand the polyurethane foam in the solution, and then drying the result or method of applying the solution of the binder mixed with the design substance to the polyurethane foam after foaming and drying the result may be used.

The design substance is not limited, as long as it is a component that contributes to improved appearance or design of the tire. One design substance may be used, or two or more design substances may be used in combination.

In the tire according to the present disclosure, the design substance is preferably selected from the group consisting of carbon black, a pigment, metal fine particles, a luminous powder, a fluorescent powder, retroreflective particles, color flop particles, and a chromic material.

This further improves the appearance of the tire.

### - Carbon black

When carbon black is used as the design substance, discoloration of the polyurethane foam layer due to aging, e.g. discoloration to brown, can be suppressed, and the tire can be maintained in black color over a long time. Even when small cracks occur in the polyurethane foam layer laminated on the outer layer of the tire, such cracks are not noticeable. The tire thus has excellent appearance. In the present disclosure, the carbon black is not included in pigments.

The carbon black is not limited, and a publicly known carbon black may be used. Examples of the carbon black include FEF, SRF, HAF, ISAF, and SAF grade carbon blacks.

In the tire according to the present disclosure, the carbon black is preferably one or more selected from the group consisting of furnace blacks.

This improves the appearance of the tire while maintaining the crack resistance.

In the case of using the carbon black as the design substance, the particle diameter of the carbon black is not limited, and may be adjusted as appropriate. For example, the particle diameter of the carbon black is 10 nm to 400 nm.

In the case of using the carbon black as the design substance, the cell diameter of the polyurethane foam is preferably 500 µm or less. This further enhances the discoloration resistance and ozone crack resistance of the polyurethane foam. In the case of using the carbon black as the design substance, the cell diameter of the polyurethane foam is more preferably 450 µm or less, 400 µm or less, or 300 µm or less.

### - Pigment

When a pigment is used as the design substance, the color of the polyurethane foam layer can be set to various colors, so that the design of the tire is further enhanced.

The pigment is not limited, and a publicly known pigment may be used. Examples of the pigment include an inorganic pigment and an organic pigment.

Examples of the inorganic pigment include zinc oxide, zinc dust, lead suboxide, aluminum pigment, lead monoxide, micaceous iron oxide pigment, basic lead chromate, basic lead carbonate, red lead, white lead, chrome yellow, ochre, kaolin, clay, ultramarine blue pigment, graphite, gohun, iron blue pigment, iron oxide pigment, brown iron oxide, lead cyanamide, limestone powder, zinc chromate, talc, zinoko, precipitated calcium carbonate, precipitated barium sulphate, yellow iron oxide, black iron oxide, tonoko, titanium dioxide, whiting, baryta powder, red iron oxide, and litharge.

Examples of the organic pigment include azo-based pigments such as soluble azo red, monoazo yellow, monoazo red, disazo yellow, disazo orange, and condensed azo pigment; and phthalocyanine-based pigments such as copper phthalocyanine blue, copper phthalocyanine green, and cobalt phthalocyanine blue.

The particle diameter of the pigment is not limited, and may be adjusted as appropriate. For example, the particle diameter of the pigment is 50 nm to 180 nm.

### - Metal fine particles

When metal fine particles are used as the design substance, for example, the polyurethane foam layer can exhibit a metallic color or change the color tone depending on the thickness, so that the design of the tire is further enhanced.

Examples of the metal of the metal fine particles include gold, silver, copper, aluminum, chromium, molybdenum, nickel, iron, zinc, titanium, platinum, palladium, rhodium, iridium, ruthenium, and osmium.

As the metal fine particles, for example, the metal nanoparticles described in JP 2017-128469 A, WO 2013/039180 A1, and the like may be used.

### - Luminous powder

When a luminous powder is used as the design substance, for example, a luminescence phenomenon in which the polyurethane foam layer emits light at night or the like can be achieved, so that the design of the tire is further enhanced.

The luminous powder is not limited, and a publicly known luminous powder may be used. Examples of the luminous powder include composition formulae: SrAl₂O₄:Eu,Dy, Sr₄Al₁₄O₂₅:Eu,Dy, SrAl₂O₄:Eu,Dy+Sr₄Al₁₄O₂₅:Eu,Dy, Sr₄Al₁₄O₂₅:Eu,Dy+CaAl₂O₄:Eu,Nd, CaAl₂O₄:Eu,Nd, ZnS:Cu,Mn,Co, and ZnS:Cu.

Examples of commercially available luminous powders include light yellow-green light emission pigments such as G series and blue-green light emission pigments such as BG series produced by Nemoto & Co., Ltd.

### - Fluorescent powder

When a fluorescent powder is used as the design substance, for example, a luminescence phenomenon in which the polyurethane foam layer emits ultraviolet light can be achieved, so that the design of the tire is further enhanced. In addition, even under weak visible light situations such as dawn, dusk, cloudiness, fog, and rainy weather, the fluorescent powder emits ultraviolet light, and thus provides excellent visibility. Since the tire is more visible to pedestrians, drivers of other vehicles, and so on, safety can be improved.

The fluorescent powder is not limited, and a publicly known fluorescent powder may be used. Examples of the fluorescent powder include the fluorescent pigments described in JP 2011-140585 A and JP 2005-314540 A.

### - Retroreflective particles

When retroreflective particles are used as the design substance, for example, light incident on the polyurethane foam layer from a light source can be reflected to the light source, so that the design of the tire is further enhanced.

The retroreflective particles are not limited, and publicly known retroreflective particles may be used. Examples of the retroreflective particles include titanium barium-based glass.

Commercially available retroreflective particles include, for example, UB series such as "UB-052NH", "UB-12NH", "UB-23NH", "UB-34NH", and "UB-45NH" produced by Unitika Ltd.

### - Color flop particles

In the present disclosure, the term "color flop particles" denotes particles having a property of changing the color tone depending on the angle or the distance. When color flop particles are used as the design material, for example, the color tone of the tire changes depending on the angle at which the tire is seen or the distance from the tire, so that the design of the tire is further enhanced.

The color flop particles are not limited, and publicly known color flop particles may be used. Examples of the color flop particles include the interference metal pigment described in JP 2012-031232 A.

Commercially available color flop particles include, for example, interference color aluminum pigment "CHROMASHINE®" produced by Toyo Aluminium K.K. (CHROMASHINE is a registered trademark in Japan, other countries, or both).

### - Chromic material

In the present disclosure, the term "chromic material" denotes, for example, a material that changes in color or develops color in response to an external stimulus such as temperature, moisture, or light (e.g. ultraviolet light). When a chromic material is used as the design substance, for example, the color changes or develops in response to the foregoing external stimulus, so that the design of the tire is further enhanced.

The chromic material is not limited, and a publicly known chromic material may be used. Examples of the chromic material include thermosensitive materials (thermochromic materials) such as the reversible thermochromic microcapsule pigment described in JP 2009-019195 A, hydrochromic materials such as the low-refractive-index pigment and the transparent metal glossy pigment described in JP 2010-208040 A, and photochromic materials such as the organic photochromic compound described in JP 2004-255041 A.

In the tire according to the present disclosure, preferably, the cell diameter of the polyurethane foam is 500 µm or less, and the design substance is selected from the group consisting of carbon black, a pigment, metal fine particles, a luminous powder, retroreflective particles, color flop particles, and a chromic material.

This further improves the appearance of the tire.

In the tire according to the present disclosure, preferably, the cell diameter of the polyurethane foam is 500 µm or more, and the design substance is selected from the group consisting of a pigment, metal fine particles, a luminous powder, retroreflective particles, color flop particles, and a chromic material.

This further enhances the design of the tire.

In one embodiment, the cell diameter of the polyurethane foam is more than 500 µm, and the design substance is selected from the group consisting of a pigment, metal fine particles, a luminous powder, retroreflective particles, color flop particles, and a chromic material.

In the tire according to the present disclosure, preferably, the design substance contains particles, and the maximum diameter of the particles is 250 µm or less. The maximum diameter of the particles is more preferably 100 µm or less.

This further improves the appearance of the tire.

The amount of the design substance is not limited, and may be adjusted as appropriate. For example, the amount of the design substance is 1 part to 100 parts by mass or 5 parts to 435 parts by mass with respect to 100 parts by mass of the binder.

### <Other components>

The polyurethane foam layer may contain, in addition to the foregoing components, a catalyst, an antifoaming agent, a foaming agent, a surfactant, a curing agent, and the like within the range not inconsistent with the gist of the present disclosure.

### (Method of preparing polyurethane foam layer)

The method of preparing the polyurethane foam layer is not limited. For example, a foaming stock solution containing a polyol and a polyisocyanate and optionally containing a catalyst, an antifoaming agent, a foaming agent, a design substance, a binder, and the like may be foamed to obtain a polyurethane foam. The method of foaming the foaming stock solution to obtain the polyurethane foam is not limited, and, for example, a publicly known method such as the method described in JP 2011-079232 A may be used.

Alternatively, the polyurethane foam layer may be prepared by bringing a solution containing a binder and a design substance into contact with a polyurethane foam after foaming to provide a binder layer on the surface of the polyurethane foam and prepare a polyurethane foam layer, as mentioned above.

In the tire according to the present disclosure, the polyurethane foam layer is laminated on the outer layer of at least part of the tire. For example, the polyurethane foam layer may be laminated on the outer layer of a sidewall portion, a tread portion, or the like of the tire.

In the tire according to the present disclosure, the outer layer is preferably the outer layer of the sidewall portion.

This improves the appearance of the tire more effectively.

In the tire according to the present disclosure, two or more different polyurethane foam layers may be laminated on the outer layer of the tire in a state of being stacked and/or combined with each other. As an example, a polyurethane foam layer containing a red pigment as a design substance is laminated on a part of the outer layer of the sidewall portion, and a polyurethane foam layer containing a black pigment as a design substance is laminated on another part of the outer layer of the sidewall portion. As another example, a polyurethane foam layer containing a pigment as a design substance is laminated on a part of the outer layer of the sidewall portion, and a polyurethane foam layer containing a luminous powder as a design substance is laminated on another part of the outer layer of the sidewall portion. As yet another example, a first polyurethane foam layer is laminated on the outer layer of the sidewall portion, and a second polyurethane foam layer is laminated on the first polyurethane foam layer.

The tire having the polyurethane foam layer laminated on the outer layer is not limited, and a publicly known tire may be used. Examples of the tire include passenger vehicle tires, racing tires, unicycle tires, motorcycle tires, tricycle tires, aircraft tires, construction vehicle tires, and agricultural machine tires.

### EXAMPLES

The presently disclosed techniques will be described in more detail below by way of examples, although these examples are intended for illustrative purposes only, and are not intended to limit the scope of the present disclosure in any way.

The details of the materials used in the examples are as follows.

### - Polyurethane foam

"HZCD" produced by Bridgestone Chemitech Co., Ltd., closed cell structure, cell diameter = 350 µm, air permeability for thickness of 2 mm = 150 cc/cm²/sec.

### - Binder

Acrylic resin: "BS050301-1" produced by Enex Co., Ltd., acrylic emulsion, indicated as acrylic resin 1 in Table 1.

Urethane-based resin: "Aqueous Urethane Uni" produced by Suzuka Fine Co., Ltd.

Fluorine-based resin: "F101" produced by Emulsion Technology Co., Ltd.

### - Design substance

Carbon black: "PSM Black 12578" produced by Mikuni Color Ltd., particle diameter = 170 µm to 210 µm, nonionic surfactant contained, pigment solid content = 40.5 %.

Pigment: "PSM Red" produced by Mikuni Color Ltd., azo-based red pigment, nonionic surfactant contained, pigment solid content = 32.0 %.

### - Material of mixture of binder and design substance

"Super Luminous Acrylic" produced by Sinloihi Co., Ltd.: combination of acrylic resin and luminous powder, light yellow, particle diameter = 4 µm to 7 µm, indicated as acrylic resin 2 in Table 1.

"Lumino Sign Suisey" produced by Sinloihi Co., Ltd.: combination of acrylic resin and fluorescent powder, orange, particle diameter = 4 µm to 76 µm, indicated as acrylic resin 3 in Table 1.

### - Rubber sheet composition

Styrene-butadiene rubber (SBR): "#1500" produced by JSR Corporation, 100 parts by mass.

Carbon black: N339, 27 parts by mass.

Silica: "Nipsil® AQ" produced by Tosoh Silica Corporation (Nipsil is a registered trademark in Japan, other countries, or both), 27 parts by mass.

Silane coupling agent: 2.5 parts by mass.

Process oil: 15 parts by mass.

Age resistor: 3 parts by mass.

Stearic acid: 2 parts by mass.

ZnO: 3 parts by mass.

Sulfur: 1.5 parts by mass.

Vulcanization accelerator (DPG): 0.8 parts by mass.

Vulcanization accelerator (DM): 1 part by mass.

Vulcanization accelerator (NS): 1 part by mass.

### Production of polyurethane foam layer

Polyurethane foam: "HZCD" was impregnated with a binder solution of each example in Table 1 and then dried to provide a binder layer on the surface of the polyurethane foam. Polyurethane foam layers of Examples 1 to 6 were thus produced.

For each obtained polyurethane foam layer, an unvulcanized rubber sheet (size: 15 cm × 15 cm, thickness: 2 mm) and the polyurethane foam layer (size: 15 cm × 15 cm, thickness: 2 mm) were stacked and vulcanized under the conditions of 160 °C and 15 min, to obtain a rubber sample having the polyurethane foam layer laminated thereon. For each rubber sample, the following ozone crack resistance, long-term appearance, and discoloration resistance were evaluated. The results are listed in Table 1.

### <Ozone crack resistance>

Assuming normal use for three years, a dynamic ozone deterioration test was conducted for 7 days under the conditions of ozone concentration: 50 pphm, temperature: 40 °C, 0.5 Hz, and dynamic strain: 40 %, in accordance with "dynamic ozone deterioration test" in JIS K 6259: 2004. The crack state of the rubber sample on the urethane side was evaluated in accordance with JIS K6259 based on the following criteria:
Grade 1: no cracks in visual observation using a magnifying glass with 20 magnification.
Grade 2: no cracks visible to the naked eye.
Grade 3: a small number of cracks visible to the naked eye.

### <Long-term appearance>

The urethane-side appearance of the rubber sample immediately after production (initial rubber sample appearance) and the urethane-side appearance of the rubber sample after the foregoing dynamic ozone deterioration test (long-term rubber sample appearance) were evaluated based on the following criteria:
Grade 1: lustrous, and bright color developed or light emitted under certain conditions.
Grade 2: lustrous, and good appearance.
Grade 3: not lustrous.

### <Discoloration resistance>

The color state of the rubber sample after the foregoing dynamic ozone deterioration test was evaluated based on the following criteria:
Grade 1: no brown discoloration observed.
Grade 2: slight brown discoloration observed.
Grade 3: Noticeable brown discoloration observed.

**[Table 1]**

| | | Example 1 | Example 2 | Example 3 | Example 4 | Example 5 | Example 6 | Comparative Example 1 |
|---|---|---|---|---|---|---|---|---|
| Polyurethane foam | Cell diameter | 350µm | 350µm | 350µm | 350µm | 350µm | 350µm | 350µm |
| Binder | Type | Urethane-based resin | Acrylic resin 1 | Acrylic resin 1 | Fluorine-based resin | Acrylic resin 2 | Acrylic resin 3 | - |
| | Binder total content (solution) | 100 | 100 | 100 | 100 | 100 | 100 | - |
| Design substance | Type | - | - | Carbon black | Red pigment | Luminous powder | Fluorescent powder | - |
| | CB/pigment total content (solution) | - | - | 25 | 25.5 | - | - | - |
| | CB/pigment solid content | - | - | 10.1 | 8.16 | - | - | - |
| Evaluation | Initial rubber sample appearance | 1 | 1 | 1 | 2 | 2 | 2 | 2 |
| | Long-term rubber sample appearance | 1 | 1 | 1 | 2 | 1 | 1 | 3 |
| | Ozone crack resistance | 2 | 2 | 1 | 2 | 2 | 2 | 3 |
| | Discoloration resistance | 2 | 2 | 1 | 2 | 2 | 2 | 3 |

As can be understood from Table 1, each rubber sample according to the present disclosure was able to maintain excellent appearance over a long time. Further, Example 3 using carbon black as a design substance had excellent ozone crack resistance and discoloration resistance over time.

### INDUSTRIAL APPLICABILITY

It is therefore possible to provide a tire capable of maintaining excellent appearance over a long time.

## Claims

1. A tire comprising:
a polyurethane foam layer laminated on an outer layer of the tire,
wherein, in the polyurethane foam layer, a binder layer is provided on a surface of a polyurethane foam.

2. The tire according to claim 1, wherein the polyurethane foam contains a design substance.

3. The tire according to claim 2, wherein the design substance is selected from the group consisting of carbon black, a pigment, metal fine particles, a luminous powder, a fluorescent powder, retroreflective particles, color flop particles, and a chromic material.

4. The tire according to claim 2, wherein a cell diameter of the polyurethane foam is 500 µm or less, and
the design substance is selected from the group consisting of carbon black, a pigment, metal fine particles, a luminous powder, a fluorescent powder, retroreflective particles, color flop particles, and a chromic material.

5. The tire according to claim 2, wherein a cell diameter of the polyurethane foam is 500 µm or more, and
the design substance is selected from the group consisting of a pigment, metal fine particles, a luminous powder, a fluorescent powder, retroreflective particles, color flop particles, and a chromic material.

6. The tire according to any one of claims 1 to 5, wherein air permeability of the polyurethane foam is 30 cc/cm²/sec to 500 cc/cm²/sec for a thickness of 2 mm.

7. The tire according to any one of claims 2 to 6, wherein the design substance is supported by the polyurethane foam via the binder layer.

8. The tire according to any one of claims 1 to 7, wherein a binder of the binder layer is one or more selected from the group consisting of a urethane-based resin and an acrylic resin.

9. The tire according to claim 3 or 4, wherein the carbon black is one or more selected from the group consisting of furnace blacks.

10. The tire according to any one of claims 2 to 9, wherein the design substance contains particles having a maximum diameter of 250 µm or less.

11. The tire according to any one of claims 1 to 10, wherein the polyurethane foam layer comprises two or more different polyurethane foam layers that are laminated on the outer layer of the tire in a state of being stacked and/or combined with each other.

12. The tire according to any one of claims 1 to 11, wherein the outer layer is an outer layer of a sidewall portion.
